# FASCICULE DE BREVET EUROPEEN

(11) **EP 2 512 262 B1**
(45) Date de publication et mention de la délivrance du brevet: **30.11.2016**
(21) Numéro de dépôt: 10803113.9
(22) Date de dépôt: 08.12.2010
(51) Int. Cl.: A23L 5/30, A23C 9/13, A23C 19/05, C11B 1/10, A23C 9/156

(54) **INSTALLATION ET PROCÉDÉ POUR LE TRAITEMENT D'UN PRODUIT DE TYPE ORGANISME VÉGÉTAL OU ANIMAL**
ANLAGE UND VERFAHREN ZUR VERARBEITUNG VON MATERIAL AUS PFLANZEN- ODER TIERORGANISMEN
FACILITY AND METHOD FOR PROCESSING PLANT OR ANIMAL ORGANISM MATERIAL

(30) Priorité: 15.12.2009 FR 0959009
(43) Date de publication de la demande: 24.10.2012
(73) Titulaire: Labo Concept Nature, 21130 Villers-les-pots (FR)
(72) Inventeur: BEAUFILS, Philippe, F-21130 Athee (FR)
(74) Mandataire: Novagraaf Technologies
(86) Numéro de dépôt international: PCT/FR2010/052646
(87) Numéro de publication internationale: WO 2011/080441

(56) Documents cités:
- CN-A- 1 883 286
- DE-U1-202007 002 435
- US-A1- 2009 011 103
- US-A1- 2009 012 183
- ZILL-E-HUMA ET AL: "Clean recovery of antioxidant flavonoids from onions: Optimising solvent free microwave extraction method", JOURNAL OF CHROMATOGRAPHY, ELSEVIER SCIENCE PUBLISHERS B.V, NL LNKD- DOI:10.1016/J.CHROMA.2009.09.044, vol. 1216, no. 45, 6 novembre 2009 (2009-11-06), pages 7700-7707, XP026691465, ISSN: 0021-9673 [extrait le 2009-09-23]
- GAO M ET AL: "Dynamic microwave-assisted extraction of flavonoids from Saussurea medusa Maxim cultured cells", BIOCHEMICAL ENGINEERING JOURNAL, ELSEVIER, AMSTERDAM, NL LNKD- DOI:10.1016/J.BEJ.2006.09.004, vol. 32, no. 2, 15 novembre 2006 (2006-11-15), pages 79-83, XP025175186, ISSN: 1369-703X [extrait le 2006-11-15]
- WANG J X ET AL: "Study of vacuum microwave-assisted extraction of polyphenolic compounds and pigment from Chinese herbs", JOURNAL OF CHROMATOGRAPHY, ELSEVIER SCIENCE PUBLISHERS B.V, NL LNKD- DOI:10.1016/J.CHROMA.2008.05.045, vol. 1198-1199, 11 juillet 2008 (2008-07-11), pages 45-53, XP022734288, ISSN: 0021-9673 [extrait le 2008-05-23]

## Description

La présente invention concerne de manière générale le traitement d'un produit de type organisme végétal ou animal pour en extraire des substances présentant des vertus ou propriétés bénéfiques et les transférer vers un milieu support, par exemple de nature alimentaire ou cosmétique. L'installation permettant la mise en oeuvre d'un tel traitement est également concernée.

Par organisme végétal (ou plante), on entend, au sens de la présente invention, tout ou partie d'un organisme ou d'une plante faisant partie du règne végétal.

A titre de plantes pouvant être traitées selon le procédé de l'invention, on peut notamment citer les plantes potagères (dont les légumes, les fines herbes, certaines plantes à fruits et les plantes condimentaires), les fleurs, les herbes et les champignons.

Par organisme animal, on entend, au sens de la présente invention, tout ou partie (par exemple la lymphe) ou encore dérivé (par exemple les produits laitiers) d'un organisme faisant partie du règne animal, l'organisme animal étant un organisme pluricellulaire tirant de l'énergie de la nourriture.

Par vertus ou propriétés bénéfiques d'une substance, on entend, au sens de la présente invention des propriétés de nature nutritionnelle et/ou anti-oxydante et/ou aromatique et/ou organoleptique et/ou antifongique.

Par propriété organoleptique, en entend, au sens de la présente invention, une propriété perceptible par l'organe olfactif d'un être humain, par voie rétronasale lors de l'ingestion d'un aliment dans la bouche.

Par propriété aromatique, on entend, au sens de la présente invention, une propriété également perceptible par l'organe olfactif d'un être humain, par inhalation des exhalaisons de l'organisme végétal.

Par propriété anti-oxydante, on entend, au sens de la présente invention l'aptitude à retarder ou limiter les phénomènes d'oxydation, en particulier dans des milieux riches en matières grasses.

Par substance antioxydante, on entend, au sens de la présente invention tout antioxydant naturel issu d'un végétal.

A titre d'antioxydants naturels, on peut notamment mentionner la vitamine E (tocophérol), la vitamine A, la vitamine C (acide ascorbique), les polyphénols et le lycophène.

Les polyphénols sont présents sous les formes suivantes dans différents organismes végétaux :
▪ d'anthocyanine dans les fruits rouges, et le vin rouge (en relation avec les tanins),
▪ sous forme de flavonoïdes dans les agrumes,
▪ sous forme de catéchines dans le thé vert, et
▪ sous forme de quercétine dans les oignons, le vin rouge, les pommes, etc.

Pour extraire de végétaux des substances présentant des propriétés données, notamment aromatiques, l'homme du métier utilise de manière classique un procédé par distillation à la vapeur d'eau. Ainsi, on extrait, par entraînement à la vapeur des plantes ou des bois aromatiques soumis à un traitement de distillation à la vapeur d'eau, des huiles essentielles, qui sont des extraits naturels essentiellement constitués de molécules aromatiques.

Si l'on souhaite transférer des substances données vers un milieu support, notamment alimentaire (lait par exemple), l'homme du métier procède généralement à un traitement d'aromatisation du milieu support par apport de solutions aromatiques solubles.

Ces procédés de l'art antérieur sont des procédés par entraînement à la vapeur, qui présentent l'inconvénient d'injecter de l'eau extérieure au produit végétal pour la chauffer et produire ensuite de la vapeur d'eau, qui à son tour chauffe le produit végétal à traiter.

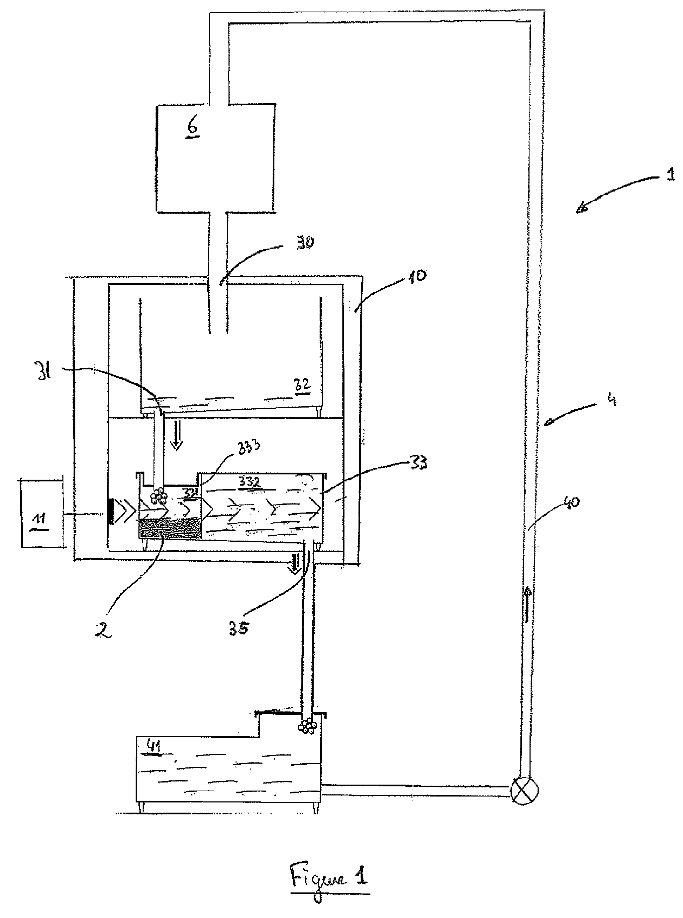

Par ailleurs, la publication scientifique de Zill-E-Human et al. s'intitulant « Clean recovery of antioxydant flavonoids from onions : optimising solvent free microwave extraction method », décrit un procédé d'extraction de flavonoïdes contenus dans un oignon. Ce procédé est réalisé sans solvant, par hydrodiffusion assistée par microondes. Plus particulièrement, des bulbes d'oignons frais pelés sont introduits dans le réacteur d'un four à microondes pour y être chauffés selon une densité de puissance déterminé, sans addition d'eau ni de solvant. L'interaction directe des micro-ondes avec l'eau biologique contenue dans les oignons favorise la libération des composés piégés dans les cellules du matériau végétal. Par contre, dans ce procédé, il n'y a pas de couplage du chauffage par microondes du matériau végétal à traiter avec la mise en circulation d'un milieu support fluide, destiné à fixer les composés à extraire comme c'est le cas dans la présente invention. Au contraire, dans ce procédé connu de l'art antérieur, les composés extraits se déplacent naturellement par diffusion hors des cellules du matériau végétal et s'écoulent, sous l'effet de la gravité, vers le bas, hors de la cavité à microondes, où ils sont ensuite condensés (figure 1 et paragraphes 2-4).

Par ailleurs, le modèle d'utilité allemand DE 202007002435 U1 décrit une installation pour traiter un produit d'origine végétale, pouvant être placée dans un four à micro-ondes. Par contre, l'installation en tant que telle ne comporte pas de micro-ondes.

La présente invention propose donc une installation et un procédé pour traiter un produit végétal, qui remédie aux inconvénients de l'art antérieur précité, en sollicitant l'eau contenue dans le produit végétal par chauffage par microondes. Il n'est donc plus nécessaire d'injecter de la vapeur d'eau pour entraîner les substances que l'on cherche à transférer et les fixer durablement sur un milieu support.

La présente invention a pour objet un procédé de traitement d'un produit de type organisme végétal comportant de l'eau et tout ou partie d'au moins une substance à propriétés anti-oxydante, et/ou aromatique, et/ou organoleptique, et/ou nutritionnelle et/ou antifongique, ledit procédé comprenant les étapes suivantes :
a) l'introduction du produit à traiter dans un récipient transparent aux ondes dans lequel le produit est confiné, ledit récipient étant à l'intérieur d'une enceinte de chauffage comportant au moins un générateur de microondes ; et
b) le chauffage par microondes dudit produit à une température comprise entre 70°C et 200°C, le chauffage du produit provoquant un dégagement de vapeur d'eau et de ladite substance ;
   ledit procédé étant caractérisé en ce que l'étape b) de chauffage par microondes est couplée à la mise en circulation d'un milieu support traversant le récipient contenant le produit à traiter, le milieu support étant suffisamment fluide pour s'écouler librement (typiquement fluide ou semi-fluide) ; et
   en ce que la température du milieu support est maintenue constamment à une température inférieure à celle du produit à traiter pendant toute la durée du traitement.

Le chauffage par micro-ondes à une température comprise entre 70°C et 200°C est suffisant pour provoquer le dégagement de vapeur d'eau, car le chauffage par micro-ondes agit sur les membranes cellulaires du produit en les fragilisant, ce qui facilite le dégagement de vapeur d'eau et libère, sous l'effet conjugué des ondes électromagnétiques et de la chaleur, le liquide intracellulaire de la substance que l'on cherche à extraire. Cette fragilisation des membranes se fait, grâce au procédé de l'invention, à des températures qui sont largement inférieures à celles classiquement utilisées dans des procédés d'extraction.

Le fait que le milieu support fluide soit maintenu à une température constamment inférieure à celle du produit végétal a pour effet de refroidir le liquide intracellulaire, de recondenser les gaz si la température de chauffage du liquide est supérieure à 100°C, de telle façon que les molécules bénéfiques, présentent en gaz, en solution ou en suspension dans les substances du produit, puissent se fixer par adsorption et/ou par absorption sur le milieu support sans transformation et de manière durable.

Ce n'est pas le cas dans les procédés habituels d'aromatisation connus de l'homme du métier. Par exemple, dans le cas d'une aromatisation classique d'un fromage de type faisselle, toutes les substances de type polyphénols ou antioxydantes migrent dans le petit lait, alors qu'elles restent dans le fromage s'il a été traité conformément au procédé de l'invention.

De manière avantageuse, la température du milieu support est maintenue constamment à une température inférieure d'au moins 30°C à celle du produit à traiter pendant toute la durée du traitement. Cet écart d'au moins 30°C entre les températures respectives du milieu support et du produit à traiter a pour effet une recondensation qui est non seulement plus efficace et régulière, mais également plus rapide.

A l'issue du chauffage par microondes, le milieu support est enrichi en substances à vertus bénéfiques issues du produit à traiter de type organisme végétal ou animal.

Selon un premier mode de réalisation particulièrement avantageux du procédé selon l'invention, l'organisme végétal contient au moins une substance à propriété anti-oxydante, de manière que le traitement consiste en un enrichissement du milieu support en substance anti-oxydante.

A titre d'organisme végétal contenant des substances à propriétés anti-oxydantes et organoleptiques, on citera notamment les fruits à écale (ou à coque), et plus particulièrement les akènes tels que la noisette ou la noix de cajou, les drupes telles que l'amande, la noix ou la pistache, et tout autre fruit à écale n'ayant pas de caractère allergène.

Selon un deuxième mode de réalisation particulièrement avantageux du procédé selon l'invention, l'organisme végétal contient au moins une substance à propriété aromatique, de sorte que le traitement consiste en une aromatisation du milieu support.

A titre d'organismes végétaux à propriétés aromatiques (ou partie, on citera notamment les bois, les plantes, les herbes et les épices aromatiques, dont on peut extraire les huiles essentielles par distillation à la vapeur (qui sont constituées exclusivement de molécules aromatiques).

A titre de plantes aromatiques utilisables dans le cadre d'une extraction réalisée conformément au procédé selon l'invention, on peut notamment citer l'anis (anis étoilé, anis vert), le basilic, l'ail, le cerfeuil, la ciboulette, l'eucalyptus, le laurier, la lavande, la menthe (menthe poivrée, menthe verte), la coriandre, l'estragon, le fenouil, la lavande, le persil, le romarin, la sauge, le serpolet, le thym.

A titre de bois aromatique (ou partie de bois) utilisable dans le cadre d'une extraction réalisée conformément au procédé selon l'invention, on peut notamment citer la cannelle, les bois de santal, de cèdre, de bouleau, de pin, de palissandre, et de gaïac.

Dans le cas d'une plante aromatique, l'étape b) de chauffage par microondes est avantageusement réalisée à une température comprise entre 70°C et 105°C, de préférence entre 80°C et 105°C, et mieux entre 95°C et 105°C. En effet, le chauffage de la plante par micro-ondes dans cette gamme de températures ne dénature pas le goût de la (ou des) substances aromatiques extraite(s) de la plante, qui correspond bien au goût du produit frais.

A titre de milieu support utilisable dans le procédé selon l'invention, on citera notamment les laits ou produits laitiers d'origine végétale ou animale (y compris les produits laitier, contenant ou dérivés de ces laits), les huiles, les pulpes de fruits, les émulsions huile-dans-eau (H/E) et eau-dans-huile (E/H), les milieux aqueux, les milieux alcooliques et hydro-alcooliques, en particulier les solutions d'alcool dans l'eau (par exemple les vins).

Par lait végétal, on entend, au sens de la présente invention toute boisson non laitière à base d'ingrédients végétaux.

Parmi les laits d'origine végétale utilisables dans le procédé selon l'invention pour être aromatisés, on citera notamment les laits végétaux à base de soja, de riz, d'avoine, d'amandes, de noisettes, de noix, de châtaignes, de noix de coco, de quinoa, de sésame, de tournesol, de millet, de chanvre, de souchet, d'orge, de cacahuètes, de kamut, d'épeautre, ou encore les laits multi-céréales.

Parmi les laits d'origine animale utilisables dans le procédé selon l'invention pour être aromatisés, on citera notamment les laits de vache, de chèvre, brebis, de chamelle, de yak et de bufflonne. Ce sont des laits essentiellement utilisés dans l'alimentation humaine, soit directement (à titre de boissons), soit indirectement comme ingrédients dans la pâtisserie, la biscuiterie, la fromagerie.

Les laits d'origine animale peuvent être crus, pasteurisés, stérilisés, en particulier à ultra haute température (UHT).

Parmi les produits laitiers suffisamment fluides pour s'écouler librement et donc pouvant servir de milieu support dans le procédé de l'invention, on peut notamment citer la crème, les laits fermentés (yaourts, kéfir, laits au bifidus...).

Pour l'aromatisation des autres types de produits laitiers dont la consistance est telle qu'ils ne peuvent pas s'écouler librement (en particulier les fromages, et plus particulièrement les fromages à pâte cuite), il suffit d'utiliser un lait préalablement aromatisé avant de procéder à sa transformation en fromage.

Par ailleurs, la présente invention a également pour objet une installation pour traiter un produit de type organisme végétal comportant de l'eau et au moins une substance à propriétés anti-oxydante, et/ou organoleptique, et/ou nutritionnelle et/ou aromatique et/ou antifongique, ladite installation comprenant une enceinte de chauffage qui comporte :
▪ une première zone destinée au stockage d'un milieu support suffisamment fluide pour s'écouler librement, et
▪ une deuxième zone constituée d'un récipient transparent aux ondes, qui comporte :
   ∘ une partie de traitement, dans laquelle est confiné ledit produit à traiter, et
   ∘ une partie de stockage du milieu support après son passage dans la partie de traitement, avec laquelle elle communique par l'intermédiaire d'une pluralité d'orifices formés dans une paroi séparant les parties de traitement et de stockage, la taille desdits orifices étant telle que ledit milieu support peut traverser ladite paroi sans entraîner ) ledit produit à traiter, ladite installation étant caractérisée en ce qu'elle comprend :
      ∘ au moins un générateur de micro-ondes à l'intérieur de ladite enceinte, dans lequel ladite partie de traitement est disposée dans le champ d'action des ondes électromagnétiques du générateur de micro-ondes et communique avec la première zone via au moins un orifice d'entrée pour permettre l'introduction du milieu support dans ladite partie de traitement, et en ce qu'elle consiste en une installation de type industriel fonctionnant en continu et qui comporte en outre un circuit de refroidissement fermé traversant ladite enceinte de chauffage, ledit circuit de refroidissement comprenant :
         - un tube transparent aux ondes reliant, extérieurement hors de l'enceinte de chauffage, la première zone à la partie de stockage,
         - des moyens de refroidissement dudit tube situés en aval de l'enceinte de chauffage.

De manière avantageuse, la première zone est une zone supérieure située au-dessus de la deuxième zone, qui est une zone inférieure.

Grâce à l'installation selon l'invention, on évite toute dégradation accidentelle du milieu support par sa surchauffe, ce qui est particulièrement critique pour un milieu support de nature alimentaire, ou de tout autre milieu riche en matières grasses (notamment cosmétique).

De manière avantageuse, les orifices de la paroi de séparation entre les parties de traitement et de stockage constituent un filtre apte à laisser passer tout milieu fluide, tout en retenant le produit à traiter dans la deuxième zone.

De manière préférée, les orifices de la paroi de séparation (constituant ou non un filtre) sont formés au niveau du fond du récipient, qui est incliné de manière à permettre le libre écoulement par gravité du milieu support de la partie de traitement vers la partie de stockage de l'enceinte de chauffage.

Selon la présente invention, l'installation est une installation de type industriel fonctionnant en continu et qui comporte en outre un circuit de refroidissement fermé traversant ladite enceinte de chauffage, ledit circuit de refroidissement comprenant :
▪ un tube transparent aux ondes reliant, extérieurement hors de l'enceinte de chauffage, la première zone à la partie de stockage,
▪ des moyens de refroidissement du tube situés en aval de l'enceinte de chauffage.

Ainsi, le milieu support fluide ou semi-fluide qui circule dans l'enceinte de traitement est refroidi en continu, sans que cela réduise le temps de traitement.

Avantageusement, l'installation de type industriel selon l'invention peut en outre comporter au moins une pompe située à l'extérieur de l'enceinte de chauffage, en aval des moyens de refroidissement dudit tube. Le nombre de pompes dans l'installation dépend en fait du degré de viscosité du milieu support. Si le milieu support est très visqueux (comme c'est par exemple le cas du coulis de tomate), l'installation selon le premier mode de réalisation comportera une deuxième pompe, voire même une troisième.

Enfin, la présente invention a encore pour objet un produit laitier susceptible d'être obtenu par le procédé selon l'invention, ledit produit présentant une quantité de polyphénols d'au moins 50 mg pour 100 ml de produit.

Cette quantité de polyphénols est non seulement largement supérieure (facteur 2,5) à celle typiquement contenue dans le lait nature (non aromatisé), mais également supérieure à la quantité de polyphénols que l'on obtiendrait avec un lait aromatisé de manière classique.

L'invention sera bien comprise et ses avantages apparaîtront mieux à la lecture de la description détaillée qui suit d'un mode de réalisation de l'installation selon l'invention représenté à titre d'exemple non limitatif.

La description se réfère à la figure unique annexée qui illustre schématiquement en coupe une installation selon l'invention selon un premier mode de réalisation.

Cette figure illustre une installation de type industriel fonctionnant en continu qui comprend une enceinte de chauffage 10 et au moins un générateur de micro-ondes 11) à l'intérieur de l'enceinte 10. Cette enceinte de chauffage 10 comporte une première zone supérieure 32 destinée au stockage d'un milieu support, et une deuxième zone inférieure 33 constituée d'un récipient 33 hermétiquement clos et transparent aux ondes. Cette zone inférieure 33 est divisée de la manière suivante :
∘ une partie 331 de traitement, dans laquelle est confiné ledit produit 2 à traiter, cette partie 331 de traitement étant disposée dans le champ d'action des ondes électromagnétiques du générateur de micro-ondes 11 et communiquant avec la première zone supérieure 32 via au moins un orifice d'entrée 31 pour permettre l'introduction du milieu support dans la partie 331 de traitement, et
∘ une partie 332 de stockage du milieu support après son passage dans la partie 331 de traitement, avec laquelle elle communique par l'intermédiaire d'une pluralité d'orifices 334 formés dans une paroi 333 séparant les parties 331 de traitement et 332 de stockage.

La taille des orifices 334, qui constituent des filtres, est telle que ledit milieu support peut traverser ladite paroi 333 sans entraîner ledit produit 2 à traiter.

L'installation selon l'invention de type industriel (illustrée sur la figure unique annexée), qui fonctionne en continu, comporte en outre un circuit de refroidissement 4 fermé traversant l'enceinte de chauffage 10.

Ce circuit de refroidissement 4 comprend :
▪ un tube 40 transparent aux ondes reliant, extérieurement hors de l'enceinte de chauffage 10, la première zone supérieure 32 à la partie 332 de stockage de la zone inférieure, et
▪ des moyens de refroidissement 41 du tube 40 situés en aval de l'enceinte de chauffage 10.

Une pompe 5 est disposée en amont des moyens de refroidissement 41 du tube 40.

### EXEMPLES

### Produits utilisés

▪ lait nature entier acheté dans le commerce ;
▪ lait écrémé (0 % de matière grasse) ;
▪ crème fraiche (35 % de matière grasse;
▪ poudre de lait demi-écrémé ;
▪ poudre de lait écrémé
▪ noix ;
▪ sarriette ;
▪ thym frais ;
▪ estragon frais;
▪ basilic frais ;
▪ épices.

### Essais réalisés

▪ Analyses par chromatographie sur couche mince sur un système permettant la détection des polyphénols dans les laits testés.
▪ Analyses par chromatographie gazeuse pour détecter les acides gras dans les laits testés.
▪ détermination des quantités de protéines et les cendres totales ;
▪ détermination de la quantité de substances réductrices ;
▪ détermination de la capacité de défenses anti-radicalaires (KRL) selon la méthode décrite dans le brevet français FR 2642526 ;
▪ Détermination des réserves de défenses (RESEDA) selon la méthode décrite dans la demande de brevet français FR 2861463, et notamment les réserves en glycosyles (ci-après désignées par R1), les réserves en sulfates (ci-après désignées par R2), et les réserves en glucuronides (ci-après désignées par R3).

### EXEMPLE 1 : 1^{ère} application lait

Une partie du lait nature entier acheté dans le commerce a été aromatisée à la noix conformément au procédé selon l'invention. Une quantité équivalente de ce lait n'a pas été traitée à des fins de comparaison.

On a déterminé, pour chacune de ces laits, leurs quantités respectives de polyphénols et d'acides gras, ainsi que celles de protéines et de cendres totales. Les résultats de ces analyses sont donnés dans le tableau 1.

Les résultats montrent que :
▪ les quantités de substances anti-oxydantes dans le lait aromatisé, et en particulier de polyphénols, sont largement supérieures (facteur 2,5) à celles contenues dans le lait nature sans toutefois que cela change la nature des acides gras ;
▪ il n'y a pas d'altération des acides gras par les micro-ondes ;
▪ les quantités de cendres totales et de protéines dans le lait aromatisé à la noix sont légèrement supérieures à celles contenues dans le lait nature (entre 7% et 11 %).

**Tableau 1 :**

| | **Résultats** | |
|---|---|---|
| Substances détectées | Lait nature | Lait aromatisé à la noix 15% (teneur massique) |
| Substances réductrices totales selon CTCPA (cendres) exprimées en acide gallique dont polyphénols totaux (exprimés en acide gallique) | 28,3-27,8 mg/100 ml | 77,5-78,3 mg/100 ml |
| | 18,6-20,0 mg/100 ml | 72.0-72.8 mg/100 ml |
| Protéines (azote x 6,25) | 2,84-2,81 % | 3,06-3,01 % |
| Cendres totales | 0,63-0,62 % | 0,72-0,67 % |
| Acides gras | Les acides gras ont été analysés sous forme d'esters méthyliques après hydrolyse acide des triglycérides en présence de méthanol : | |
| | - l'analyse des extraits par chromatographie gazeuse ne met en évidence aucune différence entre les acides gras du lait nature et ceux du lait aromatisé à la noix. | |
| | - Tous les composés détectés dans le lait aromatisé le sont également dans le lait nature. | |

### EXEMPLE 2 : 2^{ème} application lait

Une partie du lait entier acheté dans le commerce a été aromatisée à la sarriette conformément au procédé selon l'invention.

Une quantité équivalente de ce lait n'a pas été traitée à des fins de comparaison.

On a déterminé par chromatographie les quantités respectives de polyphénols et d'acides gras que contiennent ces laits (aromatisé et nature), ainsi que celles de protéines et de cendres totales.

Les résultats de ces analyses sont donnés dans le tableau 2. Ces résultats montrent que :
▪ les quantités de substances anti-oxydantes dans le lait aromatisé, et en particulier de polyphénols, sont largement supérieures (facteur 2) à celles contenues dans le lait nature sans toutefois que cela change la nature des acides gras ;
▪ il n'y a pas d'altération des acides gras par les micro-ondes ;
▪ les quantités de cendres totales et de protéines dans le lait aromatisé à la noix sont légèrement supérieures à celles contenues dans le lait nature (entre 7 et 11 %) ;
▪ les quantités de cendres totales et de protéines dans le lait aromatisé à la noix sont légèrement supérieures à celles contenues dans le lait nature (de l'ordre de 10 %).

**Tableau 2 :**

| | **Résultats** | |
|---|---|---|
| Substances détectées | Lait nature | Lait aromatisé à la sarriette 15% (teneur massique) |
| Substances rédactrices totales selon CTCPA (cendres) exprimées en acide gallique dont polyphénols totaux (exprimés en acide gallique) | 21,3-21,0 mg/100 ml | 45,0-43,2 mg/100 ml |
| | 17,0-16,9 mg/100 ml | 31.9-30.0 mg/100 ml |
| Protéines (azote x 6,25) | 2,58-2,55 % | 2,67-2,65 % |
| Cendres totales | 0,54-0,50 % | 0,55-0,49 % |
| Acides gras | Les acides gras ont été analysés sous forme d'esters méthyliques après hydrolyse acide des triglycérides en présence du méthanol. | |
| | L'analyse des extraits par chromatographie gazeuse ne met en évidence aucune différence entre les acides gras du lait nature et ceux du lait aromatisé à la sarriette. Tous les composés détectés dans le lait aromatisé le sont également dans le lait nature. | |

### EXEMPLE 3 : 1^{ère} application fromage frais à pâte molle de type Brillat-Savarin

A partir des laits de l'exemple 1 (nature d'une part et aromatisé à la noix d'autre part), on a fabriqué un fromage nature (à des fins de comparaison) et un fromage aromatisé à la noix.

Il s'agit de fromages frais à pâte molle, de type Brillat-Savarin, dont le processus de fabrication est identique à celui décrit dans l'exemple 6 de la présente demande.

On a déterminé, pour chacun de ces fromages, leurs quantités respectives de polyphénols et d'acides gras. Les résultats de ces analyses sont donnés dans le tableau 3. Ces résultats montrent que :
▪ les quantités de substances anti-oxydantes dans le fromage aromatisé, et en particulier de polyphénols, sont largement supérieures (facteur 2) à celles contenues dans le fromage nature sans toutefois que cela change la nature des acides gras ;
▪ il n'y a pas d'altération des acides gras par les micro-ondes ;
▪ les quantités de cendres totales et de protéines dans le lait aromatisé à la noix sont légèrement supérieures à celles contenues dans le lait nature (de l'ordre de 10 %).

**Tableau 3 :**

| | **Résultats** | |
|---|---|---|
| Substances détectées | fromage nature | fromage aromatisé à la noix |
| Substances réductrices totales selon CTCPA (cendres) exprimées en acide gallique dont polyphénols totaux (exprimés en acide gallique) | 30,4-30,7 mg/100 ml | 77,5-78,3 mg/100 ml |
| | 23,4 mg/100 ml | 62.0-61.4 mg/100 ml |
| Protéines (azote x 6,25) | 2,58-2,55 % | 2,67-2,65 % |
| Cendres totales | 0,54-0,50 % | 0,55-0,49 % |
| Acides gras | - L'analyse par chromatographie sur couche mince sur un système permettant la détection des polyphénols a mis en évidence dans le fromage aromatisé à la noix deux composés supplémentaires par rapport à la forme nature (un composé détecté à 366 nm et un autre détecté à 254 nm). | |
| | - En comparaison avec le lait aromatisé, seuls deux des composés provenant de la noix sont présents dans le fromage. | |

### EXEMPLE 4 : Application faisselle

On fabrique des faisselles, à partir de lait entier et de poudre de lait écrémé ou demi-écrémé, selon le procédé suivant :
∘ le jour J, le lait est standardisé en matière azotée protéique (MAP) à raison de 35 g/l par ajout de poudre de lait (écrémé ou demi-écrémé) ; le lait ainsi obtenu est ensuite traité thermiquement puis ensemencé en *Flora Danica* et *Naturen* 520 ;
∘ au jour suivant J+1, après acidification jusqu'à un pH cible de 4,70 et coagulation, les faisselles sont moulées, égouttées pendant 15 minutes puis conditionnées et stockées au froid à +4°C.

Pour cette application, 4 produits différents ont été réalisées :
∘ le témoin : il s'agit d'une faisselle non aromatisée, comprenant 1,5% en poids de poudre de lait écrémé ;
∘ essai n°1 : la faisselle est réalisée avec 1,5 % en poids de poudre de lait demi-écrémé aromatisée avec 10% en poids de basilic frais selon le procédé selon l'invention,
∘ essai n°2 : la faisselle est réalisée avec 1,5 % en poids de poudre de lait demi-écrémé aromatisée avec 10% en poids d'estragon frais selon le procédé selon l'invention,
∘ essai n°3 : la faisselle est réalisée avec 20 % en poids de lait entier aromatisé avec 10% d'estragon frais selon le procédé selon l'invention; elle comporte également 1,5% en poids de poudre de lait écrémé (de la même manière que le témoin).

Toutes les fabrications comptent 1,5% de poudre de lait le témoin et l'essai n°3 ont été fabriqués à partir de poudre de lait écrémé, alors que les essais n°1 et n°2 ont été fabriqués à partir de poudre de lait demi-écrémé. L'essai n°3 a été fabriqué à partir de 19.7% de lait écrémé aromatisé (cf. tableau n°4).

La composition des différents essais récapitulée dans le tableau n°4

On a déterminé, à la fois sur la faisselle et sur le petit-lait, la quantité de polyphénols, la quantité de substances réductrices et la capacité de défenses anti-radicalaires (KRL) et les réserves de défenses (RESEDA).

Les résultats, qui sont présentés dans le tableau 5, montrent que :
- le taux de polyphénols est plus élevé dans es faisselles aromatisées que dans la faisselle nature ; par contre, dans le petit lait de la faisselle, tous les essais sont au même niveau. Aussi, la faible perte n'est pas due à l'aromatisation ;
- en ce qui concerne l'efficacité anti-radicalaire, elle est plus élevée lorsque le lait aromatisé est utilisé au lieu de la poudre de lait ; cette efficacité anti-radicalaire est nettement diminuée dans le cas du petit lait des faisselles (d'un facteur 5 par rapport à la faisselle) ;
- pour les substances réductrices, il n'y a aucune différence flagrante entre les différents essais.

**Tableau n°4 Composition des faisselles**

| | Lait entier | | Lait entier aromatisé estragon | | Poudre de lait écrémé | | Poudre de lait demi-écrémé aromatisée basilic | | Poudre de lait demi-écrémé aromatisée estragon | | MAP |
|---|---|---|---|---|---|---|---|---|---|---|---|
| | Quantité (kg) | % | Quantité (kg) | % | Quantité (kg) | % | Quantité (kg) | % | Quantité (kg) | % | g/L |
| Témoin | 8 | 98,5 | | | 0,120 | 1,5 | | | | | 35,0 |
| Essai n°1 | 8 | 98,5 | | | | | 0,120 | 1,5 | | | |
| Essai n°2 | 8 | 98,5 | | | | | | | 0,120 | 1,5 | |
| Essai n°3 | 6,4 | 78,8 | 1,6 | 19.7 | 0,120 | 1,5 | | | | | |

**Tableau 5 résultats des tests**

| | **Equivalents Acide gallique (mg/100g)** | | | | | |
|---|---|---|---|---|---|---|
| **échantillons** | PT | SR | KRL | R1 | R2 | R3 |
| Faisselle nature (témoin) | 16,7 | 2, 6 | 204,1 | 194,9 | 207,9 | 202,0 |
| Faisselle (essai 1) | 25,2 | 2,4 | 212,9 | 205,7 | 216,7 | 176,0 |
| Faisselle (essai 2) | 24,8 | 2,4 | 217,7 | 213,1 | 221,9 | 170,3 |
| Faisselle (essai 3) | 26,8 | 2,1 | 226,3 | 212,9 | 226,1 | 184,4 |
| Petit lait nature | 5, 9 | 3,5 | 41, 6 | 46,4 | 45,3 | 48,4 |
| Petit lait (essai 1) | 6, 8 | 3,0 | 40,1 | 49,4 | 49,8 | 55,6 |
| Petit lait (essai 2) | 5,7 | 4,3 | 46, 6 | 51,3 | 50, 9 | 49,3 |
| Petit lait (essai 3) | 6,4 | 4,1 | 47,3 | 51,4 | 52,0 | 49, 9 |
| Basilic frais | 320,9 | 91,8 | 184,2 | 162,2 | 197,5 | 106,7 |
| Estragon frais | 162,6 | 43,2 | 264,2 | 211,0 | 263,3 | 167,9 |

### EXEMPLE 5 : application crème glacées

On fabrique des crèmes glacées comme suit :
∘ on réalise préalablement un pré-mélange des différents ingrédients secs, puis on les incorpore dans du lait chauffé à +40°C ;
∘ la crème fraiche est ajoutée à ce mélange lorsque la température de 60°C est atteinte ;
∘ on réalise ensuite une homogénéisation, qui s'opère à 70°C (2 étages : 200 bars et 20 bars) ;
∘ puis le produit est pasteurisé (80°C / 30 s) ;
∘ une fois la température de 3°C atteinte, le produit est maturé durant 12 à 24 heures ;
∘ après cette phase incontournable, le mélange obtenu à l'étape précédente est foisonné et glacé dans un freezer continu ;
∘ il est ensuite conditionné et il finit de durcir dans une cellule de surgélation rapide jusqu'à atteindre une température de -18°C ;
∘ les crèmes glacées sont ensuite stockées dans une chambre froide à une température de - 20°C.

Pour cette application, 4 produits différents ont été réalisées :
∘ le témoin : il s'agit d'une crème glacée non aromatisée ;
∘ essai n°1 : la crème glacée est réalisée avec 10% de poudre de lait écrémé aromatisée avec 10% d'épices selon le procédé selon l'invention (la poudre de lait écrémé est ajoutée à 10% afin de reconstituer, avec ajout d'eau, la quantité de lait du témoin) ;
∘ essai n°2 : la crème glacée est réalisée avec 23,5% de crème aromatisée avec 10% d'épices selon le procédé selon l'invention, le pourcentage de crème étant identique à celui du témoin ;
∘ essai n°3 : l la crème glacée est réalisée avec 54% de lait écrémé aromatisé avec 10% d'épices selon le procédé selon l'invention, le pourcentage de crème étant identique à celui du témoin.

La composition des différentes crèmes glacées testées est indiquée dans le tableau récapitulatif. Le choix de ces aromatisations a permis de mesurer les résultats obtenus à partir de 3 produits de nature différente sur la qualité du produit fini (poudre de lait écrémé, crème et lait écrémé). Les autres caractéristiques ont été maintenues constantes (point de congélation, extrait sec dégraissé laitier, MG, ...).

On a déterminé, à la fois sur la crème glacée, la poudre de lait demi-écrémé et le lait écrémé, la quantité de polyphénols, la quantité de substances réductrices et la capacité de défenses anti-radicalaires (KRL) et les réserves de défenses (RESEDA).

Les résultats, qui sont présentés dans le tableau 7, montrent que :
- le taux de polyphénols le taux de polyphénols est différent en fonction de la matrice utilisée pour l'aromatisation : le taux est plus élevé lorsqu'on utilise du lait et de la poudre de lait aromatisée avec des épices en comparaison avec la crème aromatisée ;
- en ce qui concerne l'effet anti-radicalaire, nous réalisons le même constat ;
   - pour les substances réductrices, nous ne remarquons aucune différence flagrante entre les différents essais.

**Tableau n°6 tableau récapitulatif des différents essais de crèmes glacées**

| | Témoin | | Esssai n°1 | | Essai n°2 | | Essai n°3 | |
|---|---|---|---|---|---|---|---|---|
| Ingrédients | témoin | poids (Kg) | témoin | poids (Kg) | témoin | poids (Kg) | témoin | poids (Kg) |
| eau | | | | | | | | |
| Lait écrémé | 54.00 | 5.4 | | | 54.00 | 5.4 | | |
| Lait écrémé aromatisé | | | | | | | | 5.4 |
| PLE écrémé | 4.50 | 0.45 | | | 4.50 | 0.45 | | 0.45 |
| PLE écrémé aromatisée | | | | | | | | |
| Crème fraîche | 23.50 | 2.35 | | | | | | 2.35 |
| Crème fraîche aromatisée | | | | | 23.50 | 2.35 | | |
| Saccharose | 15.00 | 1.5 | 15.00 | 1.5 | 15.00 | 1.5 | 15.00 | 1.5 |
| Sirop de glucose 39 DE | 2.50 | 0.25 | 2.50 | 0.25 | 2.50 | 0.25 | 2.50 | 0.25 |
| Stabilisant | 0.50 | 0.05 | 0.50 | 0.05 | 0.50 | 0.05 | 0.50 | 0.05 |
| Total | 100.0 | 10 | 100.0 | 10 | 100.0 | 10 | 100.0 | 10 |

**Tableau 7**

| | **Equivalents Acide gallique (mg/100g)** | | | | | |
|---|---|---|---|---|---|---|
| **échantillons** | PT | SR | KRL | R1 | R2 | R3 |
| Crème glacée nature | 24,2 | 62,3 | 120,0 | 60,1 | 109,4 | 24,5 |
| Crème glacée essai 1 | 27,0 | 68,5 | 137,9 | 75,8 | 122,9 | 9,0 |
| Crème glacée essai 2 | 29,3 | 68, 9 | 155,9 | 76,4 | 141,0 | 19, 9 |
| Crème glacée essai 3 | 22,8 | 73,0 | 150,1 | 53,2 | 136,6 | 20,0 |
| Poudre de lait 1/2 écrémé aromatisée avec des d'épices | 421,1 | 603,5 | 1372,2 | 725,0 | 1216,4 | 510,1 |
| Lait écrémé aromatisé avec des épices | 24,8 | 6, 6 | 143,3 | 3,5 | 114,1 | -53,1 |
| crème aromatisée avec des épices | 15, 6 | 4,8 | 103,6 | 24,4 | 86,8 | -42,4 |

### EXEMPLE 6 : 2^{ème} application fromage frais à pâte molle de type Brillat-Savarin

On fabrique des brillat-savarins comme indiqué ci-dessous (la fabrication se faisant sur plusieurs jours :
∘ les premières étapes consistent à standardiser du lait (en partant du lait entier) en matière grasse jusqu'à une valeur comprise entre 120 et 130 g/L ;
∘ après pasteurisation et rajout de chlorure de calcium, le lait est ensemencé avec 3 types de micro-organismes (CHN11, Aura PC 12, Geo 17) ;
∘ la maturation se fait à 26°C durant 4h30 en bassine ;
∘ la température est ensuite abaissée à +22°C ;
∘ le lait est ensuite emprésuré ;
∘ quatre heures après l'ensemencement et lorsque le pH cible est atteint, le produit est décaillé en morceaux de 10 mm x 10 mm x 10 mm ;
∘ Le moulage se réalise à J+1 ;
∘ les produits sont retournés à J+2 et maintenus à +22°C.
∘ après 5 à 6 heures d'égouttage, les moules sont refroidis à +11°C ;
∘ a J+3, les fromages sont salés en 2 fois, puis mis en séchoir jusqu'à obtention d'un Extrait Sec Total cible de 50 à 52%.

Les produits ont été dégustés à j+7 et J+30.

Pour cette application, 4 produits différents ont été réalisées :
- le témoin est une fabrication réalisée sans aromatisation,
- essai n°1 : il s'agit d'une fabrication réalisée avec 5% de lait entier aromatisé avec 10% de thym frais selon le procédé de l'invention,
- essai n°2 : il s'agit d'une fabrication réalisée avec 10% de lait entier aromatisé avec 10% de thym frais selon le procédé de l'invention,
- essai n°3 : il s'agit d'une fabrication réalisée avec 20% de crème aromatisée avec 10% de thym frais selon le procédé de l'invention.

Cet exemple d'application a permis d'évaluer l'impact du taux d'incorporation de lait aromatisé dans une fabrication fromagère, mais également l'influence du type de matrice (grasse ou moins grasse) sur les pertes aromatiques dans le sérum (essai n°3). Les compositions des différents essais sont récapitulées dans le tableau n°8.

On a déterminé, à la fois sur les fromages et sur les sérums, la quantité de substances réductrices et la capacité de défenses anti-radicalaires (KRL) et les réserves de défenses (RESEDA).

Les résultats, qui sont présentés dans le tableau 9, montrent que :
- le taux de polyphénols est plus élevé dans les brillats savarins aromatisés que nature (c'est-à-dire non aromatisé) ;
- par contre, en ce qui concerne le sérum du brillat-savarin, tous les essais sont au même niveau ; entre le brillat-savarin et son propre sérum, la quantité de polyphénols est deux fois plus importante pour le fromage ; par conséquent, la faible perte de [?] n'est pas due à l'aromatisation ;
- en ce qui concerne l'effet anti-radicalaire, celle-ci est plus élevée dans les brillats savarins aromatisés que dans le brillat savarin nature ; l'efficacité anti-radicalaire est également plus élevée lorsque la crème aromatisée est utilisée au lieu du lait ; lorsque le taux de lait aromatisé utilisé dans la fabrication passe de 5 % en poids à 10 % en poids, cette efficacité anti-radicalaire est également augmentée : il s'agit ici d'un effet-dose ; enfin, l'efficacité anti-radicalaire est nettement diminuée dans le cas du sérum (d'environ 4 à 7 fois par rapport au brillat-savarin ;
- pour les substances réductrices, nous ne remarquons aucune différence flagrante entre les différents essais ; il faut noter que ces substances sont environ 10 fois plus élevées dans le brillat savarin que dans son sérum.

**Tableau n°8 Composition des brillat-savarins**

| | Lait entier | | Lait entier aromatisé | | Crème (MG = 30%) | | Crème aromatisée (MG = 30%) | |
|---|---|---|---|---|---|---|---|---|
| | Quantité (kg) | % | Quantité (kg) | % | Quantité (kg) | % | Quantité (kg) | % |
| Témoin | 10, 6 | 71% | | | 4,4 | 29% | | |
| Essai n°1 | 9,85 | 66% | 0,75 | 5% | 4,4 | 29% | | |
| Essai n°2 | 9,1 | 61% | 1,5 | 10% | 4,4 | 29% | | |
| Essai n°3 | 10,6 | 71% | | | 1,6 | 11% | 2,8 | 19% |

**Tableau 9 :**

| | **Equivalents Acide gallique (mg/100g)** | | | | | |
|---|---|---|---|---|---|---|
| **échantillons** | PT | SR | KRL | R1 | R2 | R3 |
| sérum témoin brillat savarin nature | 15,1 | 3,2 | 34,7 | 35,0 | 38,3 | 35,2 |
| Sérum brillat savarin essai 1 | 16, 7 | 3,4 | 41,3 | 34,1 | 43,2 | 38,0 |
| Sérum brillat savarin essai 2 | 17,4 | 4,5 | 59,2 | 49,9 | 59,2 | 40,5 |
| Sérum brillat savarin essai 3 | 22,2 | 4,9 | 90,1 | 76,0 | 86,4 | 52,5 |
| Brillat savarin nature | 34,3 | 22,7 | 227,5 | 234,4 | 178,7 | 235,4 |
| Brillat savarin essai 1 | 46,2 | 30,0 | 277,0 | 291,7 | 180,0 | 291,7 |
| Brillat savarin essai 2 | 40,1 | 19,9 | 328,3 | 325,5 | 225,5 | 325,5 |
| Brillat savarin essai 3 | 57,0 | 33,1 | 407,7 | 419,2 | 253,9 | 419,2 |
| Thym frais | 769,6 | 142,2 | 2098,1 | 2298,9 | 2221,2 | 1104,2 |

## Revendications

1. Procédé de traitement d'un produit (2) de type organisme végétal comportant de l'eau et tout ou partie d'au moins une substance à propriétés anti-oxydante, et/ou aromatique, et/ou organoleptique, et/ou nutritionnelle et/ou antifongique, ledit procédé comprenant les étapes suivantes :
a) l'introduction dudit produit (2) dans un récipient (33) transparent aux ondes, ledit récipient (33) étant à l'intérieur d'une enceinte de chauffage (10) comportant au moins un générateur de microondes (11) ; et
b) le chauffage par microondes dudit produit (2) à une température comprise entre 70°C et 200°C, le chauffage du produit provoquant un dégagement de vapeur d'eau et de ladite substance ;
ledit procédé étant **caractérisé en ce que** l'étape b) de chauffage par microondes est couplée à la mise en circulation d'un milieu support traversant ledit récipient (33) contenant le produit (2) à traiter, ledit milieu support étant suffisamment fluide pour s'écouler librement ; et
**en ce que** la température dudit milieu support est maintenue constamment à une température inférieure à celle dudit produit (2) à traiter pendant toute la durée du traitement.

2. Procédé de traitement selon la revendication 1, **caractérisé en ce que** la température dudit milieu support est maintenue constamment à une température inférieure d'au moins 30°C à celle dudit produit (2) à traiter pendant toute la durée du traitement.

3. Procédé de traitement selon la revendication 1 ou 2, **caractérisé en ce que** le produit (2) contient au moins une substance à propriété anti-oxydante, de manière que le traitement consiste en un enrichissement du milieu support en substance anti-oxydante.

4. Procédé de traitement selon la revendication 3, **caractérisé en ce que** le produit (2) à traiter est un fruit à écale sélectionné dans le groupe constitué par les noisettes, les amandes et les noix.

5. Procédé de traitement selon la revendication 3, **caractérisé en ce que** le produit (2) à traiter contient au moins une substance à propriété aromatique, de sorte que le traitement consiste en une aromatisation du milieu support.

6. Procédé selon la revendication 5, **caractérisé en ce que** le produit (2) à traiter est tout ou partie d'une plante, d'une herbe ou d'un bois aromatique.

7. Procédé selon la revendication 6, **caractérisé en ce que** l'étape b) de chauffage par microondes dudit produit (2) est réalisé à une température comprise entre 70°C et 105°C lorsque ledit produit (2) est une plante aromatique.

8. Procédé selon la revendication 7, **caractérisé en ce que** l'étape b) de chauffage par microondes dudit produit (2) est réalisé à une température comprise entre 95°C et 105°C lorsque ledit produit (2) est une plante aromatique.

9. Procédé de traitement selon l'une quelconque des revendications précédentes, **caractérisé en ce que** le milieu support est choisi dans le groupe constitué par les laits ou produits laitiers d'origine végétale ou animale, les huiles, les pulpes de fruits, les émulsions huile-dans-eau (H/E) et eau-dans-huile (E/H), les milieux aqueux, les milieux alcooliques et les milieux hydro-alcooliques.

10. Installation (1) pour traiter un produit (2) de type organisme végétal comportant de l'eau et au moins une substance à propriétés anti-oxydante, et/ou organoleptique, et/ou nutritionnelle et/ou aromatique et/ou antifongique, ladite installation (1) comprenant une enceinte de chauffage (10) qui comporte :
▪ une première zone (32) destinée au stockage d'un milieu support suffisamment fluide pour s'écouler librement, et
▪ une deuxième zone (33) constituée d'un récipient (33) transparent aux ondes, qui comporte :
o une partie (331) de traitement, dans laquelle est confiné ledit produit (2) à traiter, et
o une partie (332) de stockage du milieu support après son passage dans la partie (331) de traitement, avec laquelle elle communique par l'intermédiaire d'une pluralité d'orifices (334) formés dans une paroi (333) séparant les parties (331) de traitement et (332) de stockage, la taille desdits orifices (334) étant telle que ledit milieu support peut traverser ladite paroi (333) sans entraîner ledit produit (2) à traiter (2),
ladite installation (1) étant **caractérisée en ce qu'**elle comprend :
o au moins un générateur de micro-ondes (11) à l'intérieur de ladite enceinte (10), dans lequel ladite partie (331) de traitement est disposée dans le champ d'action des ondes électromagnétiques du générateur de micro-ondes (11) et communique avec la première zone (32) via au moins un orifice d'entrée (31) pour permettre l'introduction du milieu support dans ladite partie (331) de traitement, et
**en ce qu'**elle consiste en une installation de type industriel fonctionnant en continu et qui comporte en outre un circuit de refroidissement (4) fermé traversant ladite enceinte de chauffage (10), ledit circuit de refroidissement (4) comprenant :
▪ un tube (40) transparent aux ondes reliant, extérieurement hors de l'enceinte de chauffage (10), la première zone (32) à la partie (332) de stockage,
▪ des moyens de refroidissement (41) dudit tube (40) situés en aval de l'enceinte de chauffage (10).

11. Installation (1) selon la revendication 10, **caractérisée en ce qu'**elle comporte en outre au moins une pompe (5) située en amont des moyens de refroidissement (41) dudit tube (40).

12. Installation (1) selon la revendication 10 ou 11, **caractérisé en ce que** la première zone (32) est une zone supérieure située au-dessus de la deuxième zone (33), qui est une zone inférieure.

13. Installation (1) selon l'une quelconque des revendications 10 à 12, **caractérisé en ce que** lesdits orifices (334) de la paroi (333) de séparation entre les parties (331) de traitement et (332) de stockage constitue un filtre.

14. Installation selon l'une quelconque des revendications 10 à 13, **caractérisée en ce que** lesdits orifices (334) sont formés au niveau du fond du récipient (33), qui est incliné de manière à permettre le libre écoulement par gravité du milieu support de la partie (331) de traitement vers la partie (332) de stockage.

## Patentansprüche

1. Verfahren zur Behandlung eines Produkts (2) vom Pflanzenorganismus-Typ, das Wasser und ganz oder teilweise mindestens eine Substanz mit antioxidativen und/oder Aroma- und/oder organoleptischen und/oder Nähr- und/oder antimykotischen Eigenschaften beinhaltet, wobei das besagte Verfahren die folgenden Schritte umfasst:
a) Einbringen des besagten Produkts (2) in ein wellendurchlässiges Gehäuse (33), wobei das besagte Gehäuse (33) im Inneren eine Heizkammer (10) ist, die mindestens einen Mikrowellengenerator (11) beinhaltet; und
b) Erhitzen des besagten Produkts (2) durch Mikrowellen auf eine Temperatur, die zwischen 70 °C und 200 °C liegt, wobei das Erhitzen des Produkts eine Freisetzung von Wasserdampf und der besagten Substanz verursacht;
wobei das besagte Verfahren **dadurch gekennzeichnet ist, dass** der Schritt b) des Erhitzens durch Mikrowellen mit dem Zirkulierenlassen eines Trägermediums gekoppelt ist, das das besagte Gehäuse (33) durchläuft, das das zu behandelnde Produkt (2) enthält, wobei das besagte Trägermedium ausreichend flüssig ist, um frei zu fließen; und
dass die Temperatur des besagten Trägermediums während der gesamten Dauer der Behandlung konstant auf einer Temperatur gehalten wird, die niedriger als die des besagten zu behandelnden Produkts (2) ist.

2. Behandlungsverfahren nach Anspruch 1, **dadurch gekennzeichnet, dass** die Temperatur des besagten Trägermediums während der gesamten Dauer der Behandlung konstant auf einer Temperatur gehalten wird, die um mindestens 30 °C niedriger als die des besagten zu behandelnden Produkts (2) ist.

3. Behandlungsverfahren nach Anspruch 1 oder 2, **dadurch gekennzeichnet, dass** das Produkt (2) mindestens eine Substanz mit antioxidativen Eigenschaften enthält, so dass die Behandlung in einer Anreicherung des Trägermediums mit einer antioxidativen Substanz besteht.

4. Behandlungsverfahren nach Anspruch 3, **dadurch gekennzeichnet, dass** das zu behandelnde Produkt (2) eine Schalenfrucht ist, die aus der Gruppe bestehend aus Haselnüssen, Mandeln und Walnüssen ausgewählt ist.

5. Behandlungsverfahren nach Anspruch 3, **dadurch gekennzeichnet, dass** das zu behandelnde Produkt (2) mindestens eine Substanz mit Aromaeigenschaft enthält, so dass die Behandlung in einer Aromatisierung des Trägermediums besteht.

6. Verfahren nach Anspruch 5, **dadurch gekennzeichnet, dass** das zu behandelnde Produkt (2) ganz oder teilweise eine aromatische Pflanze, ein aromatisches Kraut oder ein aromatisches Holz ist.

7. Verfahren nach Anspruch 6, **dadurch gekennzeichnet, dass** der Schritt b) des Erhitzens des besagten Produkts (2) durch Mikrowellen bei einer Temperatur durchgeführt wird, die zwischen 70 °C und 105 °C liegt, wenn das besagte Produkt (2) eine aromatische Pflanze ist.

8. Verfahren nach Anspruch 7, **dadurch gekennzeichnet, dass** der Schritt b) des Erhitzens des besagten Produkts (2) durch Mikrowellen bei einer Temperatur durchgeführt wird, die zwischen 95 °C und 105 °C liegt, wenn das besagte Produkt (2) eine aromatische Pflanze ist.

9. Behandlungsverfahren nach einem der vorhergehenden Ansprüche, **dadurch gekennzeichnet, dass** das Trägermedium aus der Gruppe bestehend aus Milchen und Milchprodukten pflanzlichen oder tierischen Ursprungs, Ölen, Fruchtfleisch, Öl-in-Wasser- (O/W-) und Wasser-in-Öl-Emulsionen (W/O-Emulsionen), wässrigen Medien, alkoholischen Medien und hydroalkoholischen Medien ausgewählt ist.

10. Anlage (1) zum Behandeln eines Produkts (2) vom Pflanzenorganismus-Typ, das Wasser und mindestens eine Substanz mit antioxidativen und/oder organoleptischen und/oder Nähr- und/oder Aroma- und/oder antimykotischen Eigenschaften beinhaltet, wobei die besagte Anlage (1) eine Heizkammer (10) umfasst, die Folgendes beinhaltet:
- eine erste Zone (32), die zur Lagerung eines Trägermediums vorgesehen ist, das ausreichend flüssig ist, um frei zu fließen, und
- eine zweite Zone (33), die aus einem wellendurchlässigen Gehäuse (33) besteht, das Folgendes beinhaltet:
-- einen Behandlungsteil (331), in dem das besagte zu behandelnde Produkt (2) begrenzt ist, und
-- einen Teil (332) zur Lagerung des Trägermediums nach dessen Durchlauf in dem Behandlungsteil (331), mit dem es mittels mehrerer Öffnungen (334) verbunden ist, die in einer Wand (333) ausgebildet sind, die den Behandlungsteil (331) und den Lagerungsteil (332) trennt, wobei die Größe der besagten Öffnungen (334) derart ist, dass das besagte Trägermedium die besagte Wand (333) durchströmen kann, ohne das besagte zu behandelnde (2) Produkt (2) mitzureißen,
wobei die besagte Anlage (1) **dadurch gekennzeichnet ist, dass** sie Folgendes beinhaltet:
-- mindestens einen Mikrowellengenerator (11) im Inneren des besagten Gehäuses (10), in dem der besagte Behandlungsteil (331) in dem Wirkungsfeld von elektromagnetischen Wellen von dem Mikrowellengenerator (11) angeordnet ist und mit der ersten Zone (32) durch mindestens eine Eintrittsöffnung (31) zum Ermöglichen des Einbringens des Trägermediums in den besagten Behandlungsteil (331) verbunden ist, und
dass sie in einer Anlage vom industriellen Typ besteht, die kontinuierlich arbeitet und die außerdem einen geschlossenen Kühlkreislauf (4) beinhaltet, der die besagte Heizkammer (10) durchläuft, wobei der besagte Kühlkreislauf (4) Folgendes umfasst:
- ein wellendurchlässiges Rohr (40), das außerhalb der Heizkammer (10) die erste Zone (32) mit dem Lagerungsteil (332) verbindet,
- Mittel (41) zur Kühlung des besagten Rohrs (40), die sich stromabwärts der Heizkammer (10) befinden.

11. Anlage (1) nach Anspruch 10, **dadurch gekennzeichnet, dass** sie außerdem mindestens eine Pumpe (5) beinhaltet, die sich stromaufwärts von Mitteln (41) zur Kühlung des besagten Rohrs (40) befinden.

12. Anlage (1) nach Anspruch 10 oder 11, **dadurch gekennzeichnet, dass** die erste Zone (32) eine obere Zone ist, die sich über der zweiten Zone (33) befindet, die eine untere Zone ist.

13. Anlage (1) nach einem der Ansprüche 10 bis 12, **dadurch gekennzeichnet, dass** die besagten Öffnungen (334) der Trennwand (333) zwischen dem Behandlungsteil (331) und dem Lagerungsteil (332) einen Filter bilden.

14. Anlage nach einem der Ansprüche 10 bis 13, **dadurch gekennzeichnet, dass** die besagten Öffnungen (334) auf Höhe des Bodens des Gehäuses (33) ausgebildet sind, der geneigt ist, um das freie Fließen des Trägermediums durch Schwerkraft von dem Behandlungsteil (331) zu dem Lagerungsteil (332) zu ermöglichen.

## Claims

1. Method for treating a product (2) of the plant organism type comprising water and all or part of at least one substance with antioxidant, and/or aromatic, and/or organoleptic, and/or nutritional and/or antifungal properties, said method comprising the following steps:
a) introducing said product (2) into a vessel (33) transparent to waves, said vessel (33) being inside a heating enclosure (10) comprising at least one microwave generator (11); and
b) heating said product (2) using microwaves to a temperature between 70°C and 200°C, the heating of the product causing an emission of water vapour and of said substance;
said method being **characterised in that** step b) for heating using microwaves is coupled with the circulation of a carrier medium passing through said vessel (33) containing the product (2) to be treated, said carrier medium being sufficiently fluid to flow freely; and
**in that** the temperature of said carrier medium is kept constantly at a temperature below that of the product (2) to be treated throughout the treatment.

2. Treatment method according to claim 1, **characterised in that** the temperature of said carrier medium is kept constantly at a temperature at least 30°C below that of the product (2) to be treated throughout the treatment.

3. Treatment method according to claim 1 or 2, **characterised in that** the product (2) contains at least one substance with antioxidant properties, such that the treatment consists of an enrichment of the carrier medium with antioxidant substance.

4. Treatment method according to claim 3, **characterised in that** the product to be treated is a nut selected in the group consisting of hazelnuts, almonds and walnuts.

5. Treatment method according to claim 3, **characterised in that** the product (2) to be treated contains at least one substance with aromatic properties, such that the treatment consists of an aromatisation of the carrier medium.

6. Method according to claim 5, **characterised in that** the product (2) to be treated is all or part of a plant, a herb or an aromatic wood.

7. Method according to claim 6, **characterised in that** step b) for heating said product (2) using microwaves is performed at a temperature between 70°C and 105°C when said product (2) is an aromatic plant.

8. Method according to claim 7, **characterised in that** step b) for heating said product (2) using microwaves is performed at a temperature between 95°C and 105°C when said product (2) is an aromatic plant.

9. Treatment method according to any one of the preceding claims, **characterised in that** the carrier medium is chosen in the group consisting of milks or milk products of plant or animal origin, oils, fruit pulps, oil-in-water (O/W) and water-in-oil (W/O) emulsions, aqueous media, alcoholic media and hydroalcoholic media.

10. Facility (1) for treating a product (2) of the plant organism type comprising water and all or part of at least one substance with antioxidant, and/or aromatic, and/or organoleptic, and/or nutritional and/or antifungal properties, said facility (1) comprising a heating enclosure (10) which includes:
- a first zone (32) for storing a carrier medium that is sufficiently fluid to flow freely, and
- a second zone (33) consisting of a vessel (33) transparent to waves, which includes:
-- a treatment part (331), wherein said product (2) to be treated is confined, and
-- a part (332) for storing the carrier medium after the passage thereof in the treatment part (331), with which it is connected via a plurality of orifices (334) formed in a wall (333) separating the treatment (331) and storage (332) parts, the size of said orifices (334) being such that said carrier medium can pass through said wall (333) without entraining said product (2) to be treated (2),
said facility (1) being **characterised in that** it comprises:
-- at least one microwave generator (11) inside said enclosure (10), wherein said treatment part (331) is arranged in the field of action of the electromagnetic waves of the microwave generator (11) and is connected to the first zone (32) via at least one inlet orifice (31) to enable the introduction of the carrier medium into said treatment part (331), and **in that** it consists of an industrial type facility operating continuously and which further includes a closed cooling circuit (4) passing through said heating enclosure (10), said cooling circuit (4) comprising:
- a tube (40) transparent to waves connecting, externally outside the heating enclosure (10), the first zone (32) to the storage part (332),
- cooling means (41) of said tube (40) situated downstream from the heating enclosure (10).

11. Facility (1) according to claim 10, **characterised in that** it further includes at least one pump (5) situated upstream from the cooling means (41) of said tube (40).

12. Facility (1) according to claim 10 or 11, **characterised in that** the first zone (32) is an upper zone situated above the second zone (33), which is a lower zone.

13. Facility (1) according to any one of claims 10 to 12, **characterised in that** said orifices (334) of the separating wall (333) between the treatment (331) and storage (332) parts forms a filter.

14. Facility according to any one of claims 10 to 13, **characterised in that** said orifices (334) are formed at the bottom of the vessel (33), which is inclined so as to enable the free gravitational flow of the carrier medium from the treatment part (331) to the storage part (332).
